# EUROPÄISCHE PATENTSCHRIFT

(11) **EP 2 877 910 B1**
(45) Veröffentlichungstag und Bekanntmachung des Hinweises auf die Patenterteilung: **17.01.2018**
(21) Anmeldenummer: 13739403.7
(22) Anmeldetag: 16.07.2013
(51) Int. Cl.: G06F 3/01, G06F 3/041, G06F 3/0346, G06F 3/0354, G06F 3/0481

(54) **EINGABEVORRICHTUNG MIT VERSENKBARER BERÜHRUNGSEMPFINDLICHER OBERFLÄCHE**
INPUT DEVICE HAVING A LOWERABLE TOUCH-SENSITIVE SURFACE
DISPOSITIF D'ENTRÉE À SURFACE SENSIBLE AU TOUCHER ENFONÇABLE

(30) Priorität: 25.07.2012 DE 102012213020
(43) Veröffentlichungstag der Anmeldung: 03.06.2015
(73) Patentinhaber: Bayerische Motoren Werke Aktiengesellschaft, 80809 München (DE)
(72) Erfinder: LAUBER, Felix, 80634 München (DE)
(86) Internationale Anmeldenummer: PCT/EP2013/064971
(87) Internationale Veröffentlichungsnummer: WO 2014/016162

(56) Entgegenhaltungen:
- EP-A1- 0 551 778
- EP-A1- 1 691 263
- EP-A2- 2 428 882
- FR-A1- 2 937 434
- US-A1- 2008 120 568
- US-A1- 2009 058 819
- US-A1- 2010 253 645
- US-A1- 2011 128 164

## Beschreibung

Die Erfindung betrifft eine Eingabevorrichtung mit entlang einer Achse verschiebbarer Oberfläche und einen Computer umfassend eine solche Eingabevorrichtung und eine graphische Benutzerschnittstelle mit räumlicher Erscheinung.

Heutzutage sind Anzeigen weit verbreitet, die ein zweidimensionales Bild anzeigen können. Auf diesen Anzeigen werden häufig graphische Benutzerschnittstellen angezeigt, in denen sich Fenster überlagern, wie beispielsweise in den Betriebssystemen Mac OS von Apple Inc. oder Windows von Microsoft Inc. Diese Überlagerung erzeugt beim Benutzer den Eindruck, als seien die Fenster vor- beziehungsweise hintereinander angeordnet. Ebenso sind Anzeigen bekannt, die Darstellungen derart anzeigen, dass bei einem Benutzer ein räumlicher dreidimensionaler Eindruck der Darstellung entsteht. Bei solchen Anzeigen können Objekte ebenfalls vor und hinter anderen Objekten für einen Benutzer erscheinen. Hierin beziehen sich die Begriffe vor und hinter beziehungsweise vor- und hintereinander sowohl auf Fälle, in denen Objekte (beispielsweise Fenster) nur zweidimensional, wie oben beschrieben, angezeigt werden oder auf Anzeigen, die einen dreidimensionalen Eindruck erzeugen, angezeigt werden, wie ebenfalls oben beschrieben. Weiter hinten befindliche Objekte erscheinen dem Benutzer "tiefer" zu liegen.

Aus der US 2008/0120568 A1 ist eine Vorrichtung zur Eingabe von Daten bekannt, die eine graphische Benutzerschnittstelle auf einem Bildschirm anzeigt und die dreidimensionalen Bewegungen eines Zeigers verwendet. Je nachdem in welcher Raumschicht über der Vorrichtung sich der Zeiger befindet, wird eine andere graphische Benutzerschnittstelle ausgewählt. Um mit der ausgewählten Benutzerschnittstelle zu interagieren wird der Zeiger auf den Bildschirm geführt. Die dreidimensionale Position des Zeigers wird mithilfe von zwei Kameras erfasst.

Diese Vorrichtung hat zum einen den Nachteil, dass ein Zeiger zur Eingabe benötigt wird, und zum anderen, dass die Erfassung des Zeigers mit zwei Kameras geschieht, die für Verschmutzung und Verkratzungen anfällig sind. Außerdem ist die Bedienung insoweit nicht intuitiv, als dass der Zeiger zum Interagieren auf den Bildschirm geführt werden muss.

Dokument FR 2 937 434 A1 offenbart einen Multifunktionsknopf. Dieser ist dazu ausgelegt zu rotieren und ist axial verschiebbar. Ferner umfasst der Knopf eine druckempfindliche Oberfläche.

Dokument US 2010/253645 A1 offenbart Eingabegeräte mit einem kapazitiven Kraftsensor mit einer Eingabefläche. Die Eingabegeräte umfassen ein Vorspannelement, das derart Kraft ausübt, dass die Eingabefläche niedergedrückt werden kann und ohne Krafteintrag wieder in ihre Ursprungsposition zurückgeht.

Dokument EP2428882 A2 offenbart ein mobiles Endgerät und eine Steuerungsmethode für das Anzeigen einer 3D-Benutzeroberfläche. Aufgabe der Erfindung ist es, die oben genannten Nachteile des Standes der Technik zu beseitigen.

Die Aufgabe der Erfindung wird durch einen Computer nach Anspruch 1 gelöst. Vorteilhafte Ausführungsformen sind in den abhängigen Ansprüchen definiert.
Eine Eingabevorrichtung, umfasst: Eine berührungsempfindliche Oberfläche, Mittel zum Befestigen der Oberfläche, wobei der Oberfläche eine Ebene zugewiesen ist, wobei die Mittel zum Befestigen dazu eingerichtet sind, eine Verschiebung der Oberfläche entlang einer zur zugewiesenen Ebene senkrechten Achse zu ermöglichen, und dazu eingerichtet sind, dass die Oberfläche eine erste Position und durch Verschiebung eine davon verschiedene zweite Position einnehmen kann.
Die berührungsempfindliche Oberfläche ist dazu eingerichtet Berührungseingaben zu empfangen und kann ein sogenanntes Touch Pad oder ein Touch Screen sein, gegebenenfalls sogar eine berührungsempfindliche autosteroskopische Anzeige zur Darstellung von dreidimensionalen Inhalten. Die Verschiebung der Oberfläche erfolgt entlang oder entgegen einer Verschiebungsrichtung. Die Oberfläche ist insbesondere flach und liegt in der der Oberfläche zugewiesenen Ebene. Die Oberfläche ist somit senkrecht zu ihrer Ausdehnung verschiebbar. Anders ausgedrückt ist die Oberfläche versenkbar. Auch bei einer gebogenen Oberfläche wird die zugewiesene Ebene bevorzugt so gewählt, dass für den Benutzer beim Verschieben der Eindruck entsteht, die Oberfläche sei versenkbar. Häufig wird die Ebene bei einer fest installierten Eingabevorrichtung so gewählt, dass sie horizontal ist.
Auf diese Weise wird dem Benutzer eine berührungsempfindliche Oberfläche bereitgestellt, die sich für den Benutzer in zwei verschiedenen Positionen befinden kann, die vom Benutzer leicht mit der Vorstellung von "Tiefe" verbunden werden kann. Diese verschiedenen Positionen der Oberfläche können wiederum vor- beziehungsweise hintereinander angeordneten Objekten einer graphischen Benutzerschnittstelle zugeordnet werden. Die Objekte der Benutzerschnittstelle können Fenster oder Arbeitsflächen, sogenannte Desktops, oder Ebenen einer dreidimensionalen Benutzerschnittstelle sein. Je nachdem in welcher Position sich die Oberfläche befindet, kann für das der Position zugeordnete Objekt eine Berührungseingabe auf der Oberfläche vorgenommen werden. Anders ausgedrückt: Eine tiefere Positionierung der Oberfläche wählt ein tiefer liegendes Objekt der Benutzerstelle aus. Die Berührungseingabe kann darin bestehen, die Position der Berührungseingabe auf der Oberfläche zu verändern, wodurch die Position eines Zeigers bezogen auf das Objekt (beispielsweise in einem Fenster oder in einer zugeordneten Ebene) verändert wird.

Der Benutzer benötigt zur Eingabe keinen Zeiger, sondern kann die Eingabe beispielsweise mit seinem Finger vornehmen. Auch werden keine Kameras zur Positionserfassung des Fingers benötigt, dies geschieht über die berührungsempfindliche Oberfläche, die wesentlich robuster gegen Verschmutzung oder Verkratzungen ausgelegt sein kann. Die Eingabe in vor- oder hintereinander angeordneten Objekten ist für den Benutzer intuitiv, da eine Verknüpfung zwischen der Versenkung, anders ausgedrückt der Tiefe, der berührungsempfindlichen Oberfläche und der Tiefe der Eingabe in die Benutzerschnittstelle, beziehungsweise der Auswahl eines vorderen oder hinteren Objekts, hergestellt werden kann.

Bevorzugt umfassen die Mittel zum Befestigen eine Führung, insbesondere eine Führungsschiene. Die berührungsempfindliche Oberfläche kann an mehreren Punkten der Kanten durch die Führung befestigt werden, insbesondere in einem Gehäuse.

Vorteilhafterweise umfasst die Eingabevorrichtung ferner einen Positionssensor, der dazu eingerichtet ist, zu erfassen, ob die Oberfläche in der ersten oder zweiten Position ist. Der Positionssensor kann einen Potentiometer, einen Hall-Effekt Sensor, eine Lichtschranke oder ähnliches umfassen. Weiterhin kann der Positionssensor dazu eingerichtet sein die Position der Oberfläche kontinuierlich zu erfassen und gegebenenfalls einem ersten oder zweiten Positionsbereich zuzuordnen, wobei die Positionsbereiche wiederum der ersten beziehungsweise zweiten Position zugeordnet sind.

Generell kann die Eingabevorrichtung und insbesondere die Oberfläche und die Mittel zum Befestigen dazu eingerichtet sein, der Oberfläche die Einnahme von mehr als zwei Positionen zu ermöglichen, beispielsweise drei, vier oder fünf Positionen. Jede dieser Positionen kann dann ein weiter vorne beziehungsweise weiter hinten angeordnetes Objekt der Benutzerschnittstelle zugewiesen werden. Ebenfalls können die Eingabevorrichtung und insbesondere die Oberfläche und die Mittel zum Befestigen dazu eingerichtet sein, dass die Oberfläche kontinuierlich, also stufenlos, Positionen einnimmt, die gegebenenfalls kontinuierlich durch den Positionssensor erfasst werden. Jeder erfassten Position kann dann eine "Tiefen" beziehungsweise Ebene einer insbesondere dreidimensionalen Benutzerschnittstelle zugeordnet sein. Anders ausgedrückt gibt es eine Vorschrift für eine kontinuierliche Zuordnung der Position der Oberfläche zu einer "Tiefe" beziehungsweise Ebene einer Benutzerschnittstelle.

In einer Weiterentwicklung umfasst die Eingabevorrichtung Mittel zum Ausüben von Kräften auf die Oberfläche parallel zur Achse, wobei die Mittel zum Ausüben von Kräften insbesondere dazu eingerichtet sind unterschiedlich starke wahrnehmbare Kräfte in Abhängigkeit der Position der Oberfläche auszuüben. Die Eingabevorrichtung kann damit dem Benutzer Gegenkräfte beziehungsweise Gegendruck bei der Verschiebung der berührungsempfindlichen Oberfläche bereitstellen. Die ausgeübten Kräfte sind in oder gegen die Verschiebungsrichtung orientiert. Die Mittel zum Ausüben von Kräften ermöglichen es für den Menschen über seine Hand beziehungsweise Finger gut wahrnehmbare Kräfte auszuüben, die dem Benutzer der Eingabevorrichtung ein Feedback bereitstellen. Die Mittel zum Ausüben von Kräften können so ausgelegt werden, dass die ausgeübten Kräfte auf die Oberfläche dann besonders groß (aber nicht unüberwindbar) sind, wenn die Oberfläche die erste oder zweite Position eingenommen hat. Mithilfe dieser Kräfte kann dem Benutzer ein Hinweis bereitgestellt werden, dass sich die Oberfläche in der ersten beziehungswiese zweiten Position befindet. In diesem Fall ist die Kraft entgegen der durch den Benutzer hervorgerufenen Verschiebungsrichtung der Oberfläche ausgerichtet. In manchen Fällen wird über diesen Mechanismus eine sogenannte Arretierung bereitgestellt.

Die Mittel zum Ausüben von Kräften können mechanische Federn, einen Elektromotor, einen Magneten und/oder einen Elektromagneten umfassen. Diese werden auf an sich bekannte Weise eingesetzt um die Kräfte auf die Oberfläche auszuüben.

Insbesondere kann auch die Oberfläche (Elektro)Magnete umfassen und die (Elektro)Magnete der Mittel zum Ausüben von Kräften können so angeordnet (und angesteuert) werden, dass sie eine Arretierungsposition der Oberfläche (ohne festen Anschlag) erzeugen.

Vorteilhafterweise sind die Mittel zum Ausüben von Kräften dazu eingerichtet, Kräfte derart auszuüben, dass die Oberfläche in der ersten und/oder zweiten Position verbleibt, ohne dass Kräfte durch einen Benutzer auf die Oberfläche ausgeübt werden, und dass die Oberfläche nicht in der ersten oder zweiten Position verbleibt, ohne dass Kräfte durch den Benutzer ausgeübt werden, und wobei die Mittel zum Ausüben von Kräften insbesondere dazu eingerichtet sind, Arretierungspositionen für die Oberfläche zu erzeugen.

Ein Computer umfasst: Eine Eingabevorrichtung wie oben dargestellt mit Positionssensor; Eine elektronische Recheneinheit; Eine Anzeige, die dazu eingerichtet ist, eine graphische Benutzerschnittstelle anzuzeigen, wobei die Benutzerschnittstelle bei einem Benutzer den Eindruck erweckt, ein erstes Objekt sei räumlich vor einem zweiten Objekt angeordnet, wobei die elektronische Recheneinheit dazu eingerichtet ist, die Position der Oberfläche zu empfangen und die erste Position der Oberfläche dem ersten Objekt zuzuordnen und die zweite Position der Oberfläche dem zweiten Objekt zuzuordnen.

Auf diese Weise wird dem Benutzer eine intuitive Verknüpfung zwischen der räumlichen Position der Eingabevorrichtung und der scheinbar räumlichen Position der Objekte der Benutzerschnittstelle bereitgestellt. Beispielsweise kann vorgesehen sein, dass ein Versenken der berührungsempfindlichen Oberfläche von einer ersten Position zu einer zweiten Position zu einem weiter hinten liegenden Objekt der Benutzerschnittstelle führt und dort Eingaben/Positionierungen eines Zeigers ermöglicht.

Es kann weiterhin vorgesehen sein, dass die Oberfläche eine dritte Position einnehmen kann und dass die elektronische Recheneinheit dazu eingerichtet ist, die dritte Position der Oberfläche einem dritten Objekt zuzuordnen, das räumlich hinter dem zweiten Objekt angeordnet ist. Ebenso kann vorgesehen sein, dass die Oberfläche kontinuierlich Positionen einnehmen kann, die ebenfalls kontinuierlich Objekten zugordnet sind, beispielsweise der Tiefe in einer dreidimensionalen Benutzerschnittstelle.

Die Anzeige kann ein typischer LCD Bildschirm sein, ein autostereoskopisches Display für dreidimensionale Anzeigen, ein Display mit zu verwendenden Shutter-Brillen für dreidimensionale Anzeige, aber auch ein insbesondere binokulares Head-Mounted Display. Die angezeigten Objekte können Fenster, Icons, Arbeitsflächen (auch Desktops genannt), oder Ebenen in einer dreidimensionalen Benutzerschnittstelle sein. Insbesondere können dediziert hintereinander angeordnete Ebenen in einer dreidimensionalen Benutzerschnittstelle vorgesehen sein.

In einer Variante ist die erste Position der Oberfläche für den Benutzer vor der zweiten Position der Oberfläche oder die erste Position der Oberfläche für den Benutzer hinter der zweiten Position der Oberfläche.

In einer vorteilhaften Ausgestaltung umfasst das erste Objekt eine Fläche, insbesondere ein Fenster, und die Recheneinheit ist dazu eingerichtet, die Position einer Berührung auf der Oberfläche zu empfangen und die Position der Berührung einer Position in der Fläche des ersten Objekts zuzuordnen.

### KURZE BESCHREIBUNG DER ZEICHNUNG

Fig. 1 zeigt ein Ausführungsbeispiel einer Eingabevorrichtung im Querschnitt.
Fig. 2 zeigt eine Ebenenstruktur einer graphischen Benutzerschnittstelle.
Fig. 3a bis 3f zeigen ein Ausführungsbeispiel einer Eingabevorrichtung in verschiedenen Zuständen im Querschnitt.

### DETAILLIERTE BESCHREIBUNG DES AUSFÜHRUNGSBEISPIELS

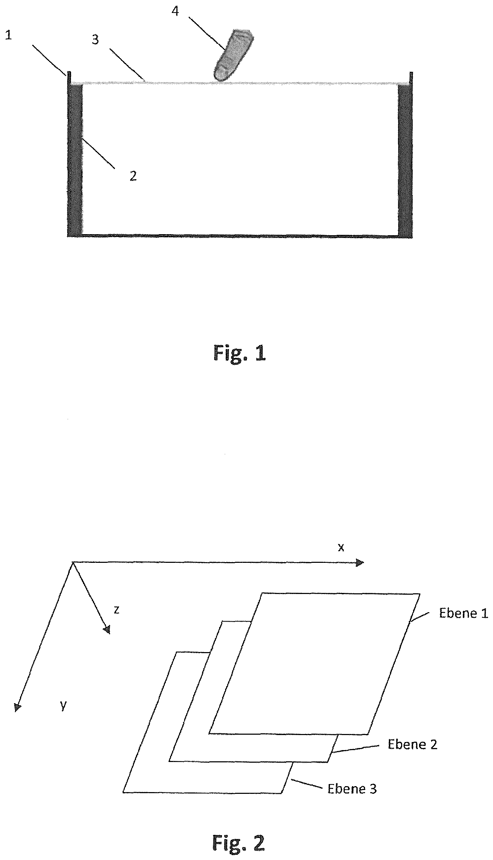

Fig. 1 zeigt ein Ausführungsbeispiel einer Eingabevorrichtung. Es ist ein Gehäuse 1 umfasst, das eine stützende Struktur für die Eingabevorrichtung bildet. Ein rechteckiges Touch Pad 3 ist an seinen Ecken oder Kanten an einer vertikalen Führung 2 befestigt. Dem Touch Pad 3 ist eine Ebene derart zugeordnet, dass das Touch Pad 3 in dieser Ebene liegt. Statt einem Touch Pad 3 ist auch denkbar ein berührungsempfindliches Display vorzusehen. Die Führung 2 bietet dem Touch Pad 3 Halt und ist dazu eingerichtet vertikal nach oben und vertikal nach unten Kraft auszuüben. Dazu umfasst die Führung 2 beispielsweise am Touch Pad 3 angeordnete Magneten beziehungsweise Elektromagneten und in der Führung 2 angeordnete Magnete beziehungsweise Elektromagnete. Alternativ oder zusätzlich kann in der Führung 2 ein Elektromotor angeordnet sein. Um die Position des Touch Pads 3 zu erfassen umfasst die Führung 2 darüber hinaus noch einen Positionssensor. Im Ausgangszustand befindet sich das Touch Pad 3 nahezu an der obersten Kante des Gehäuses 1. Drückt der Benutzer mit seinem Finger 4 auf das Touch Pad 3, so versenkt sich das Touch Pad 3 weiter nach unten ins Gehäuse 2 und zwar senkrecht zu der dem Touch Pad 3 zugeordneten Ebene und vorliegend auch senkrecht zur Ausdehnung des Touch Pads 3. Dadurch kann der Benutzer nicht nur in einer Ebene navigieren, sondern auch in die dritte Dimension. Mithilfe der Führung 2 und den (Elektro)Magneten/Elektromotoren kann ein Gegendruck/eine Gegenkraft auf das Touch Pad 3 ausgeübt werden, was es ermöglicht, dass Touch Pad 3 bei ausreichend geringem oder keinem Kraftaufwand des Fingers 4 sich wieder nach oben bewegen kann aus einer versenkten Position heraus.

Die Eingabevorrichtung wird zur Navigation in einer dedizierten Ebenenstruktur beziehungsweise Schichtstruktur einer dreidimensionalen Benutzerschnittstelle verwendet, wie in Figur 2 gezeigt und wie sie durch ein autostereoskopisches Display angezeigt werden kann. In Figur 2 wird eine Benutzerschnittstelle schematisch dargestellt, die dem Benutzer insofern räumlich erscheint, als dass die Ebene 1 räumlich vor der Ebene 2 angeordnet zu sein scheint, die wiederum räumlich vor der Ebene 3 angeordnet zu sein scheint. Die Anordnung der Ebenen vor- und hintereinander wird durch eine unterschiedliche Anordnung der Ebenen in der z-Richtung erreicht. Die z-Richtung repräsentiert die "Tiefe" der Benutzerschnittstelle. Die Ebenen sind ein Beispiel für die oben erwähnten Objekte. Innerhalb jeder Ebene können sich Fenster oder beispielsweise Icons befinden. In diesem Anwendungsfall kann der Benutzer auf jeder einzelnen Ebene in x-/y- Richtung mithilfe einer Bewegung des Fingers auf dem Touch Pad 3 navigieren beziehungsweise einen Zeiger positionieren. Eine andere Ebene erreicht der Benutzer indem er das Touch Pad 3 in das Gehäuse 1 drückt und es damit versenkt oder nach oben hervorkommen lässt (mithilfe von (Elektro)Magneten/Elektromotoren). Die Führung 2 kann mithilfe von (Elektro)Magneten/Elektromotoren fühlbare Hinweise bereitstellen, wenn die Position des Touch Pads 3 einer Ebene der Benutzerschnittstelle entspricht, beispielsweise durch kurzzeitiges Arretieren (ohne Anschlag) des Touch Pads 3 in der entsprechenden Position.

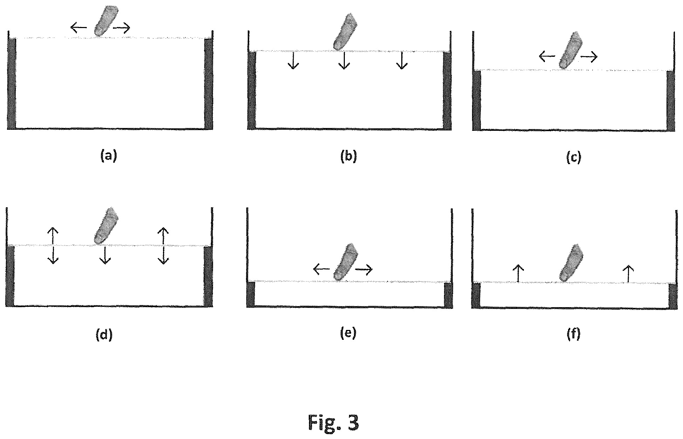

Fig. 3a bis 3f zeigen ein Ausführungsbeispiel einer Eingabevorrichtung in verschiedenen Zuständen im Querschnitt. Die Eingabevorrichtung entspricht der Eingabevorrichtung wie in Fig. 1 gezeigt und wird zur Navigation in verschiedenen Ebenen einer dreidimensionalen Benutzerschnittstelle wie in Fig. 2 gezeigt verwendet.

Fig. 3a zeigt die Interaktion eines Fingers eines Benutzers mit dem Touch Pad in x-beziehungsweise y-Richtung. Diese Interaktion wird verwendet um einen Zeiger in Ebene 1 der Benutzerschnittstelle nach Fig. 2 zu bewegen.

Fig. 3b zeigt wie ein Benutzer über seinen Finger eine Kraft bzw. Druck auf das Touch Pad ausübt und damit das Touch Pad versenkt, oder anders ausgedrückt, tiefer in das Gehäuse schiebt. Dadurch wird das Touch Pad von einer ersten Position in eine zweite Position verschoben. Dies geschieht senkrecht zur Ebene des Touch Pads, die vorliegend zugleich die Bezugsebene darstellt.

Fig. 3c zeigt, wie ein Benutzer die gewünschte Tiefe, oder anders ausgedrückt Position, des Touch Pads erreicht hat und wieder in x- beziehungsweise y-Richtung Navigationseingaben vornimmt. Die Tiefe des Touch Pads ist einer tiefer liegenden Ebene einer dreidimensionalen Benutzerschnittstelle zugeordnet, nämlich Ebene 2. Die Eingabevorrichtung gibt dem Benutzer beim Erreichen der zugeordneten Tiefe einen Widerstand zurück, mithilfe der Mittel zum Ausüben von Kräften. Dies kann auch als Arretierung betrachtet werden. Dies signalisiert dem Benutzer, dass er mit dem Touch Pad die nächste Ebene erreicht hat.

Fig. 3d zeigt, wie ein Benutzer wieder die Tiefe, allgemeiner die Position, des Touch Pads ändert. Dazu löst er die Arretierung und drückt das Touch Pad tiefer. Alternativ kann er dem Gegendruck nachgeben, zu dem die Mittel zum Ausüben von Kräften eingerichtet sein können, was das Touch Pad nach oben bewegt.

Fig. 3e zeigt, wie ein Benutzer das Touch Pad in eine dritte Tiefe, anders ausgedrückt Position, bewegt hat, die wiederum einer weiter hinten liegenden Ebene der dreidimensionalen Benutzerschnittstelle entspricht, nämlich Ebene 3. In dieser Ebene navigiert der Benutzer nun einen Zeiger.

Fig. 3f zeigt, wie ein Benutzer die Arretierung des Touch Pads löst oder dem Gegendruck nachgibt und das Touch Pad wieder höher bewegt wird, das heißt in die rückwärtige z-Richtung.

## Patentansprüche

1. Computer, umfassend:
Eine Eingabevorrichtung;
Eine elektronische Recheneinheit;
Eine Anzeige, die dazu eingerichtet ist, eine graphische Benutzerschnittstelle anzuzeigen, wobei die Benutzerschnittstelle bei einem Benutzer den Eindruck erweckt, ein erstes Objekt sei räumlich vor einem zweiten Objekt angeordnet,
wobei die Eingabevorrichtung umfasst:
Eine berührungsempfindliche Oberfläche (3),
Mittel (2) zum Befestigen der Oberfläche (3),
wobei der Oberfläche (3) eine Ebene zugewiesen ist, **dadurch gekennzeichnet,**
**dass** die Mittel (2) zum Befestigen dazu eingerichtet sind, eine Verschiebung der Oberfläche (3) entlang einer zur zugewiesenen Ebene senkrechten Achse zu ermöglichen,
und dazu eingerichtet sind, dass die Oberfläche (3) eine erste Position und durch Verschiebung eine davon verschiedene zweite Position einnehmen kann; und dass die Eingabevorrichtung weiter einen Positionssensor umfasst, der dazu eingerichtet ist, zu erfassen und auszugeben, ob die Oberfläche (3) in der ersten oder zweiten Position ist und dass die elektronische Recheneinheit dazu eingerichtet ist, die Position der Oberfläche (3) zu empfangen und die erste Position der Oberfläche (3) dem ersten Objekt zuzuordnen und die zweite Position der Oberfläche (3) dem zweiten Objekt zuzuordnen.

2. Computer nach Anspruch 1, wobei die Mittel (2) zum Befestigen eine Führung, insbesondere eine Führungsschiene, umfassen.

3. Computer nach einem der vorhergehenden Ansprüche, ferner umfassend Mittel zum Ausüben von Kräften auf die Oberfläche (3) parallel zur Achse, wobei die Mittel zum Ausüben von Kräften insbesondere dazu eingerichtet sind unterschiedlich starke wahrnehmbare Kräfte in Abhängigkeit der Position der Oberfläche (3) auszuüben.

4. Computer nach Anspruch 3, wobei die Mittel zum Ausüben von Kräften einen Elektromotor, einen Magneten und/oder einen Elektromagneten umfassen.

5. Computer nach einem der Ansprüche 3 oder 4, wobei die Mittel zum Ausüben von Kräften dazu eingerichtet sind, Kräfte derart auszuüben, dass die Oberfläche (3) in der ersten und/oder zweiten Position verbleibt, ohne dass Kräfte durch einen Benutzer auf die Oberfläche (3) ausgeübt werden, und wobei die Mittel zum Ausüben von Kräften insbesondere dazu eingerichtet sind, Arretierungspositionen für die Oberfläche (3) zu erzeugen.

6. Computer nach einem der vorhergehenden Ansprüche, wobei die Oberfläche (3) durch das Ausüben von wahrnehmbaren Kräften auf die Oberfläche parallel zur Achse durch einen Benutzer verschiebbar ist.

7. Computer nach einem der vorhergehenden Ansprüche, wobei die berührungsempfindliche Oberfläche (3) dazu eingerichtet ist, die Position von Berührungseingaben eines Benutzers auf der Oberfläche (3) zu erfassen, die insbesondere dazu dienen die Position eines Zeigers auf einer Anzeige zu steuern.

8. Computer nach einem der vorhergehenden Ansprüche, wobei die erste Position der Oberfläche (3) für den Benutzer vor der zweiten Position der Oberfläche (3) ist oder wobei die erste Position der Oberfläche (3) für den Benutzer hinter der zweiten Position der Oberfläche (3) ist.

9. Computer nach einem der vorhergehenden Ansprüche, wobei das erste Objekt eine Fläche umfasst, insbesondere ein Fenster, und wobei die Recheneinheit dazu eingerichtet ist, die Position einer Berührung auf der Oberfläche (3) zu empfangen und die Position der Berührung einer Position in der Fläche des ersten Objekts zuzuordnen.

10. Computer nach einem der vorhergehenden Ansprüche, wobei die Anzeige eine autostereoskopische Anzeige ist, oder ein Head-Mounted Display.

## Claims

1. A computer, comprising:
an input device;
an electronic computing unit;
a display, which is designed to display a graphical user interface, wherein the user interface creates the impression for a user as if a first object were disposed spatially in front of a second object,
wherein the input device comprises:
a touch-sensitive surface (3),
means (2) for securing the surface (3),
wherein the surface (3) is assigned to a plane,
**characterised in that**
the securing means (2) are designed to enable a displacement of the surface (3) along an axis perpendicular to the assigned plane,
and are designed so that the surface (3) can assume a first position and, by displacement, a different, second position;
and **in that** the input device also comprises a position sensor, which is designed to detect and output whether the surface (3) is in the first or second position,
and **in that**
the electronic computing unit is designed to receive the position of the surface (3) and to assign the first position of the surface (3) to the first object and to assign the second position of the surface (3) to the second object.

2. A computer according to claim 1, wherein the securing means (2) comprise a guide, more especially a guide rail.

3. A computer according to either one of the preceding claims, further comprising means for exerting forces onto the surface (3) parallel to the axis, wherein the means for exerting forces are designed more especially to exert perceptible forces of different strength depending on the position of the surface (3).

4. A computer according to claim 3, wherein the means for exerting forces comprise an electric motor, a magnet and/or an electromagnet.

5. A computer according to either one of claims 3 or 4, wherein the means for exerting forces are designed to exert forces in such a way that the surface (3) remains in the first and/or second position, without forces being exerted by a user onto the surface (3), and wherein the means for exerting forces are designed more especially to produce locking positions for the surface (3).

6. A computer according to any one of the preceding claims, wherein the surface (3) can be displaced by the exertion of perceptible forces onto the surface parallel to the axis by a user.

7. A computer according to any one of the preceding claims, wherein the touch-sensitive surface (3) is designed to detect the position of touch inputs of a user on the surface (3), which more especially are used to control the position of a pointer on a display.

8. A computer according to any one of the preceding claims, wherein the first position of the surface (3) is in front of the second position of the surface (3) for the user, or wherein the first position of the surface (3) is behind the second position of the surface (3) for the user.

9. A computer according to any one of the preceding claims, wherein the first object comprises an area, more especially a window, and wherein the computing unit is designed to receive the position of a touch on the surface (3) and to assign the position of the touch with a position in the area of the first object.

10. A computer according to any one of the preceding claims, wherein the display is an autostereoscopic display or a head-mounted display.

## Revendications

1. Ordinateur comprenant :
un dispositif d'entrée,
une unité de calcul électronique
un affichage qui est réalisé pour permettre d'afficher un interface d'utilisateur graphique, cette interface donnant à un utilisateur l'impression qu'un premier objet est situé dans l'espace à l'avant d'un second objet,
le dispositif d'entrée comprenant :
une surface sensible au contact (3),
des moyens (2) de fixation de la surface (3),
à la surface (3) étant attribué un plan,
**caractérisé en ce que**
- les moyens de fixation (2) sont réalisés pour permettre une translation de la surface (3) le long d'un axe perpendiculaire au plan attribué,
et sont réalisés de sorte que la surface (3) puisse prendre une première position et par translation une seconde position différente de celle-ci,
- le dispositif d'entrée comporte en outre un capteur de position qui est réalisé pour détecter et indiquer si la surface (3) est dans la première position ou dans la seconde position, et
l'unité de calcul électronique est réalisée pour recevoir la position de la surface (3) et associer la première position de la surface (3) au premier objet et la seconde position de la surface (3) au second objet.

2. Ordinateur conforme à la revendication 1,
dans lequel les moyens de fixation (2) comprennent un organe de guidage, en particulier un rail de guidage.

3. Ordinateur conforme à l'une des revendications précédentes, comportant en outre des moyens permettant d'exercer des forces sur la surface (3) parallèlement à l'axe, les moyens permettant d'exercer des forces étant en particulier réalisés pour exercer des forces perceptibles de différentes intensités en fonction de la position de la surface (3).

4. Ordinateur conforme à la revendication 3,
dans lequel les moyens permettant d'exercer des forces comprennent un moteur électrique, un aimant et/ou un électroaimant.

5. Ordinateur conforme à l'une des revendications 3 et 4,
dans lequel les moyens permettant d'exercer des forces sont réalisés pour permettre d'exercer des forces de sorte que la surface (3) reste dans la première et/ou dans la seconde position sans que des forces soient exercées par un utilisateur sur cette surface (3), et les moyens permettant d'exercer des forces sont en particulier réalisés pour permettre d'obtenir des positions d'arrêt pour la surface (3).

6. Ordinateur conforme à l'une des revendications précédentes,
dans lequel la surface (3) peut être déplacée par translation parallèlement à l'axe par un utilisateur en exerçant des forces perceptibles sur celle-ci.

7. Ordinateur conforme à l'une des revendications précédentes,
dans lequel la surface sensible au contact (3) est réalisée de façon à permettre de détecter la position d'entrées par contact d'un utilisateur sur la surface (3), qui servent, en particulier, à commander la position d'un indicateur sur un écran.

8. Ordinateur conforme à l'une des revendications précédentes,
dans lequel la première position de la surface (3) est située, pour l'utilisateur à l'avant de la seconde position de la surface (3) ou la première position de la surface (3) est située pour l'utilisateur à l'arrière de la seconde position de la surface (3).

9. Ordinateur conforme à l'une des revendications précédentes,
dans lequel le premier objet comprend une surface, en particulier une fenêtre et l'unité de calcul est réalisée pour recevoir la position d'un contact sur la surface (3) et associer la position du contact à une position sur la surface du premier objet.

10. Ordinateur conforme à l'une des revendications précédentes,
dans lequel l'écran est un écran auto-stéréoscopique ou un visiocasque.
